# EUROPÄISCHE PATENTSCHRIFT

(11) **EP 1 220 094 B1**
(45) Veröffentlichungstag und Bekanntmachung des Hinweises auf die Patenterteilung: **06.09.2006**
(21) Anmeldenummer: 00128773.9
(22) Anmeldetag: 30.12.2000
(51) Int. Cl.: G06F 9/445, G06F 11/20, B61L 1/00, G06F 1/00

(54) **Verfahren zur Programmierung eines redundant ausgeführten Zielsystems mit Sicherheitsanforderung**
Method of programming a safety-critical redundant system
Procédure de programmation pour un système redondant à sécurité critique

(43) Veröffentlichungstag der Anmeldung: 03.07.2002
(73) Patentinhaber: Siemens Schweiz AG, 8047 Zürich (CH)
(72) Erfinder: Brunner, Leo, 8038 Zürich (CH); Halbritter, Jean-Pierre, 8427 Rorbas (CH); Giugni, Andrea, 8105 Regensdorf (CH)
(74) Vertreter: Berg, Peter

(56) Entgegenhaltungen:
- EP-A- 0 706 275
- EP-A- 0 997 807
- DE-C- 4 134 207
- US-A- 4 982 430

## Beschreibung

Die vorliegende Erfindung betrifft ein Verfahren zur sicheren Programmierung eines redundant ausgeführten Zielsystems, welches mindestens einen ersten und zweiten Zielrechner aufweist, die über eine Schnittstelle mit einem Datenübermittlungssystem verbunden und über einen Steuerbefehl selektierbar sind.

Ein derartiges Verfahren wird in vielen Bereichen der Technik eingesetzt, bei denen die Funktion des Zielsystems besonderen sicherheitsrelevanten Anforderungen genügen muss. Als Anwendungen für derartige Zielsysteme sind beispielsweise Steuerungsanlagen in der Produktionsindustrie, verfahrenstechnische Anlagen in der chemischen und pharmazeutischen Industrie und datenverarbeitende Anlagen im Rahmen staatlicher Hoheitsaufgaben (z.B. Finanzen, Strafverfolgung, Verteidigung) zu nennen. Die vorliegende Anmeldung betrachtet als weiteren Anwendungsfall ganz besonders die Steuerungsanlagen und leittechnischen Anlagen des personen- und güterbefördernden Verkehrs, insbesondere des Strassen-, Schienen- und Luftverkehrs.

Im Hinblick auf den Schienenverkehr können derartige Zielsysteme alle Rechnersysteme sein, die Einfluss auf die Streckensignalisierung, die Zugbeeinflussung auf der Strecke, die Fahrwegsuche und Fahrwegbereitstellung haben. Als ein Zielsystem sei die sogenannte LEU (Lineside Electronic Unit) genannt, die Strecken- und/oder Signalinformationen für einen ganz genau bestimmten Streckenpunkt empfängt und ausgibt.

Bezüglich der LEU ist selbstverständlich einleuchtend, dass an die Programmierung und an die gesamte Auslegung und Funktionssicherheit zur Gewährung der Sicherheit des Schienensverkehrs ganz besonders strenge sicherheitsrelevante Anforderungen zu stellen sind, was im besonderen immer auch die redundante Ausführung derartiger Zielsysteme beinhaltet.

Eine dieser strengen sicherheitsrelevanten Anforderungen kommt bei der Programmierung und/oder einer Änderung bestehender Programme auf derartigen Zielsystemen zum Tragen. Die Programmierung und/oder Änderung wird dabei in der Regel zunächst im Rahmen einer Projektierungsphase des gewünschten Umfanges des Programms und/oder der gewünschten Programmänderung festgelegt. Aus dieser Projektierungsphase leitet sich ein Datensatz für das Zielsystem ab, der einerseits in einer Datenübermittlungsphase an das Zielsystem übermittelt werden muss. Andererseits muss auch mit hoher Zuverlässigkeit eine Rückkopplung der Datenübermittlungsphase an die Projektierungsphase vorgesehen sein, welche die korrekte und vollständige Implementierung des gewünschten Programms und/oder der gewünschten Programmänderung überprüfbar macht.

In der Praxis sieht es der Ablauf eines solchen voranstehend beschriebenen Verfahrens vor, dass ein für die Sicherheit auf den Streckenpunkt verantwortlicher Projektierer den Zielsystemdatensatz erstellt und dieser Zielsystemdatensatz von einem Programmierer, insbesondere dem Personal zur Streckenbetreuung, auf das Zielsystem übertragen wird und der Programmierer dem Projektierer die ordnungsgemässe und vollständige Übermittlung des Zielsystemdatensatzes auf das Zielsystem bestätigt.

Dieses Verfahren kann im besonderen mit dem Fehler behaftet sein, dass der Programmierer sich sicher ist, den Zielsystemdatensatz auf das Zielsystem ordnungsgemäss und vollständig übertragen zu haben und dies auch dem Projektierer quittiert, dennoch aber nicht mit an 100% ige Sicherheit grenzender Wahrscheinlichkeit wirklich weiss, mit welchen Daten das Zielsystem zukünftig tatsächlich arbeiten wird. Er ist beispielsweise nicht in der Lage zu überprüfen, ob der Zielsystemdatensatz tatsächlich als Teil seiner Implementierung auch vollständig und richtig gespeichert worden ist oder ob es infolge von Übertragungsschwierigkeiten zu einer Veränderung des Zielsystemdatensatzes kommen konnte.

Dokument US 4 982 430 offenbart ein Verfahren zur Programmierung eines Zielsystems mit Sicherheitsanforderungen, wobei Zieldaten vom zentralen Rechner (network control center) zu einem Anwender (subscriber terminal) herunter geladen werden, und dort mittels Prüfsummen auf Integrität überprüft werden. Eine Zurückübermittlung der Daten vom Anwender zum zentralen Rechner wird auch vorgeschlagen, damit eine Überprüfung der, dem Anwender vermittelte Zieldaten, auf dem zentralen Rechner ebenso gewährleistet werden kann.

Der vorliegenden Erfindung liegt daher die Aufgabe zugrunde, ein Verfahren wie in Anspruch 1 definiert wird anzugeben, dass es erlaubt, die ordnungsgemässe und vollständige Implementierung eines Zielsystemdatensatzes auf ein Zielsystem einfach bis in die Ebene der Projektierungsphase zuverlässig zu überprüfen.

Diese Aufgabe wird bei einem Verfahren der eingangs genannten Art erfindungsgemäss dadurch gelöst, dass
A) aus einer Projektiervorgabe für das Zielsystem mittels eines Datenerstellungssystem ein Zielsystemdatensatz erzeugt wird;
B) der Zielsystemdatensatz mittels des Datenübermittlungssystems mit einem ersten Schlüssel codiert an den ersten Zielrechner und mittels einem zweiten Schlüssel codiert an den zweiten Zielrechner übertragen werden;
C) der codiert übermittelte Zielsystemdatensatz mittels jeweils eines auf dem ersten und dem zweiten Zielrechner abgelegten Decodierschlüssels entschlüsselt und abgespeichert wird;
D) der so entschlüsselte Zielsystemdatensatz selbst mit jeweils einem auf dem ersten und dem zweiten Zielrechner abgelegten dritten bzw. vierten Schlüssel erneut codiert und an das Datenübermittlungssystem zurück übermittelt werden;
E) aus dem zurückübermittelten codierten Zielsystemdatensatz im Datenübermittlungssystem eine erste und eine zweite Prüfsumme gebildet wird,
F) mittels des Datenerstellungssystems der Zielsystemdatensatz mit dem dritten und vierten Schlüssel codiert und aus dem codierten Zielsystemdatensatz eine dritte bzw. vierte Prüfsumme gebildet wird, wobei die erste, zweite, dritte und vierte Prüfsumme jeweils einen ersten und ein zweiten Teil umfassen;
G) die ersten Teile der dritten und vierten Prüfsumme im Datenübermittlungssystem mit den ersten Teilen der ersten bzw. zweiten Prüfsumme verglichen und bei Übereinstimmung quittiert werden; und
H) die zweiten Teile der ersten und zweiten Prüfsumme im Datenerstellungssystem mit den zweiten Teilen der dritten bzw. vierten Prüfsumme verglichen und bei Übereinstimmung quittiert werden.

Mit diesen Verfahrensschritten kann überprüft werden, dass der oder die Zielsystemdatensätze fehlerfrei übermittelt und in dem richtigen Zielrechner gespeichert worden sind. Die hohe Sicherheit der richtigen Abspeicherung der Zielsystemdatensätze wird dadurch erreicht, dass der abgespeicherte Zielsystemdatensatz sicher zurückgelesen und mit dem ursprünglichen Zielsystemdatensatz verglichen wird. Dabei wird vor dem Vergleich als Prüfcode eine mächtige Prüfsumme gebildet, um die zu vergleichenden Datenmengen zu reduzieren und damit eine Überprüfung durch Personen zu ermöglichen. Der Vergleich wird von den zwei unabhängigen Systemen, dem Datenerstellungssystem/Programmierer einerseits und dem Datenübertragungssystem/ Projektierer andererseits und für die Anzahl vorhandener Zielrechner durchgeführt. Da die Übertragung der Zielsystemdatensätze und das Zurücklesen über die gleiche Schnittstelle läuft, werden die Zielsystemdatensätze jeweils vor der Übertragung mit unterschiedlichen Schlüsseln (erster und dritter Schlüssel bzw. zweiter und vierter Schlüssel) codiert. Dies gewährleistet die Fehleroffenbarung bei Problemen mit der Schnittstelle.

Um eine Verwechslung der Zielrechner zu verhindern, werden für den ersten und für den zweiten Zielrechner unterschiedliche Schlüssel verwendet (erster und zweiter Schlüssel bzw. dritter und vierter Schlüssel.

Vorteilhafte Ausgestaltungen der Erfindung sind in weiteren Ansprüchen angegeben.

Mit diesem Verfahren ergeben sich zusätzlich folgende Vorteile:
i) Für die Übertragung der Zielsystemdaten an mehrere unabhängigen Zielrechner ist nur eine Schnittstelle notwendig. Dadurch ist das Übertragungssystem kostengünstig und platzsparend zu realisieren.
ii) Die Anwendung des Verfahrens gestaltet sich benutzerfreundlicher im Vergleich zu einem Verfahren basierend auf mehreren unabhängigen Schnittstellen, da die erforderlichen Verbindungen des Datenübertragungssystems mit der jeweilige Schnittstelle entfällt.
iii) An das Datenübertragungssystem werden keine sicherheitsrelevanten Anforderungen gestellt, somit kann das System kostengünstig realisiert werden.
iv) Durch die Auswertung der zurückgelesenen Daten kann ein Sicherheitsnachweis geführt und dokumentiert werden.

Durch den Schutz der Zielsystemdatensätze mit einer Daten-Prüfsumme CRC16 kann eine Manipulation der Daten minimiert werden.

Vor einer Übertragung eines neuen Zielsystemdatensatzes in den ersten bzw. zweiten Zielrechner wird ein Speicherinhalt und ein erster Freigabecode in dem ersten Zielrechner und ein zweiter Freigabecode in einem zweiten Zielrechner gelöscht.

Nach einer erfolgreichen Übertragung des Zielsystemdatensatzes wird der erste Freigabecode wieder in den ersten Zielrechner und der zweite Freigabecode wieder in den zweiten Zielrechner geschrieben. Damit wird sichergestellt, dass in Folge eines Abbruchs der Übertragung der Zielsystemdatensätze keine inkonsistente Daten auf dem Zielsystem existieren.

Das Verfahren wird nachfolgend anhand der Zeichnung beispielsweise näher erläutert. Dabei zeigen:
- Figur 1: ein Blockdiagramm für das Verfahren zur Erzeugung, Übertragung und Speicherung der Zielsystemdatensätze an das Zielsystem
- Figur 2: ein Blockdiagramm zum Verschlüsselungsprinzip
- Figur 3: ein Blockdiagramm zum Prüfsummenvergleich

Das Verfahren wird im folgenden am Beispiel der Programmierung einer gleisseitig angeordneten elektronischen Einheit, beispielsweise unter dem Namen "LEU S21 M" erhältlich beschrieben, wie sie in der Eisenbahn-Signaltechnik zu finden ist. Unter dem Oberbegriff Zielsystemdatensatz ZDS werden hier Projektierungsdaten für die LEU S21 M verstanden. Bei der LEU S21 M handelt es sich um ein Zielsystem ZS umfassend u.a. zwei Zielrechner ZR1, ZR2, auf denen identische Projektierdaten ZDS abgelegt werden. Das Zielsystem ZS ist mit einer hohen Sicherheitsanforderung (SIL4) ausgeführt. In der europäischen Norm EN 50126 sowie in der Vornorm prEN 50129 sind Sicherheitsstufen (Safety Integrity Level SIL) definiert. Dieses Zielsystem ZS verfügt über nur eine Schnittstelle INT zur Übertragung der Projektierungsdaten ZDS. Sowohl ein Datenerstellungssystem DES als auch ein Datenübermittlungssystem DUS erfüllen keine speziellen Sicherheitsanforderungen (SILO). Die geforderte Sicherheitsstufe des Zielsystems ZS ist demzufolge höher als jene des Datenübermittlungssystems DUS und des Datenerstellungssystems DES.

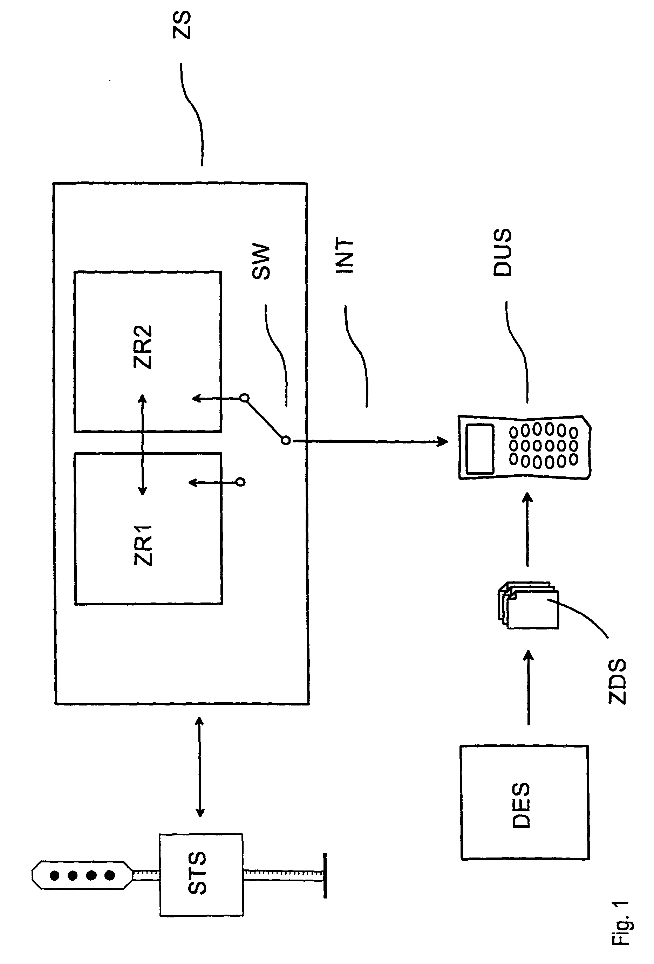

Figur 1 zeigt in schematischer Darstellung das redundant ausgeführte Zielsystem ZS mit zwei untereinander gekoppelten Zielrechnern ZR1, ZR2, die mit einer Schalteinrichtung SW über eine Schnittstelle INT mit dem Datenübermittlungssystem DUS einerseits und mit einem Streckensignalsystem STS andererseits verbunden sind.

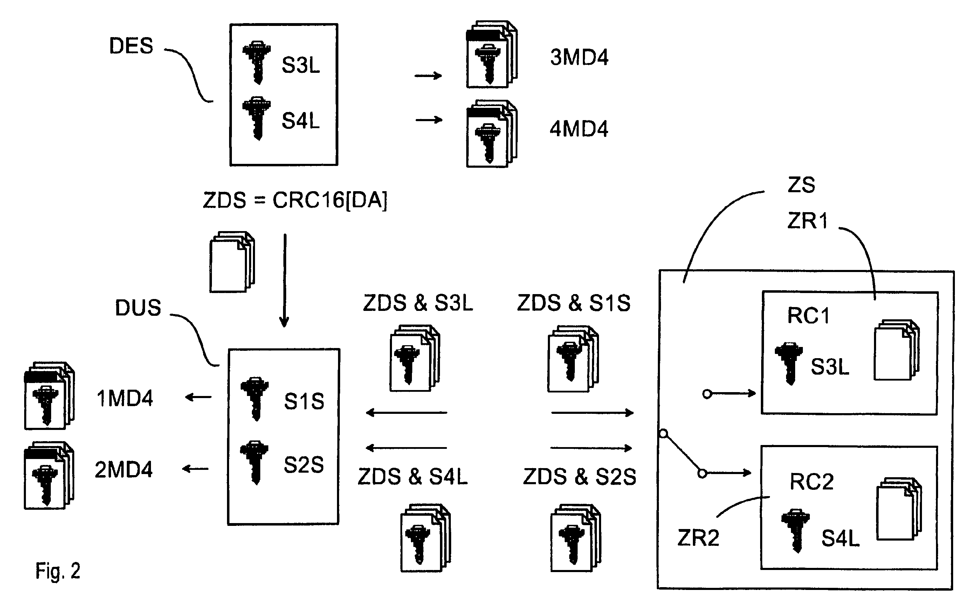

Wie in Figur 2 dargestellt, werden die aus einer Projektiervorgabe für das Zielsystem ZS bestimmten Projektierdaten ZDS mit dem Datenerstellungssystem DES, im folgenden Projektierer mit Projektiergerät oder kurz Projektierer genannt, erzeugt. Der Inhalt der Projektierdaten ZDS wird an ein Datenübermittlungssystem DUS, im folgenden Programmierer mit Programmiergerät oder kurz Programmierer genannt, übergeben.

Von dem Projektierer DES werden im Anschluss die Projektierdaten ZDS, für den ersten Zielrechner ZR1 mit einem dritten Schlüssel S3L, die für den zweiten Zielrechner ZR2 mit einem vierten Schlüssel S4L codiert und mit den beiden Datensätzen je ein Prüfcode 3MD4, 4MD4 gebildet. Als Prüfcode hat sich die MD4-Prüfsumme als vorteilhaft erwiesen. Die MD4-Prüfsumme besteht aus einem 16 Byte String. Wie in Tabelle 1 dargestellt, bilden die ersten eins bis acht Byte einen ersten Teil und die folgenden acht Byte einen zweiten Teil.

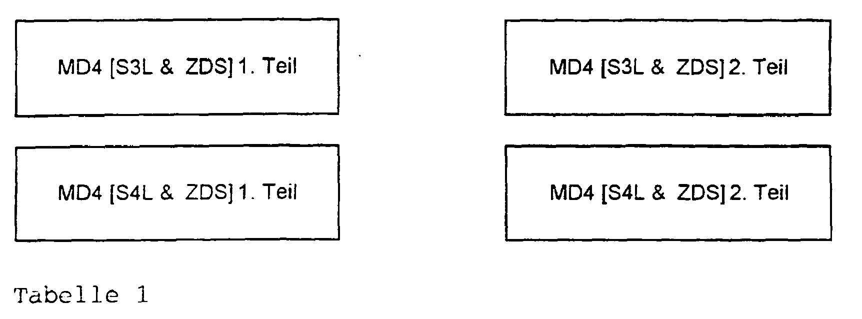

Die ersten Teile der berechneten MD4-Prüfsumme werden dem Programmierer gemäss der Darstellung in Tabelle 2 übermittelt.

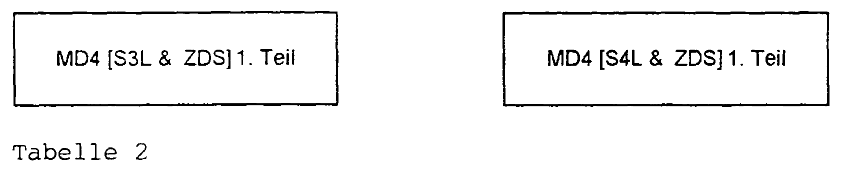

Bevor mit der Datenübertragung an das Zielsystem ZS begonnen wird, werden vom Programmierer mit dem Programmiergerät DUS Freigabecodes RC1, RC2 und die Speicherinhalte der beiden Zielrechner ZR1 und ZR2 gelöscht. Im Anschluss werden die Projektierdaten ZDS mit dem Programmiergerät DUS mit dem ersten Schlüssel S1S codiert an den ersten Zielrechner ZR1 und mit dem zweiten Schlüssel S2S codiert an den zweiten Zielrechner ZR2 übertragen. Der entsprechende Zielrechner ZR1, ZR2 wird über einen Steuerbefehl selektiert.

Die codiert übermittelten Projektierdaten S1S(ZDS), S2S(ZDS) werden mittels jeweils eines auf dem ersten und dem zweiten Zielrechner ZR1, ZR2 abgelegten Decodierschlüssels entschlüsselt und abgespeichert.

Für die Verifikation werden die so entschlüsselten Projektierdaten mit jeweils einem auf dem ersten und dem zweiten Zielrechner ZR1,ZR2 abgelegten dritten bzw. vierten Schlüssel S3L,S4L erneut codiert und vom Programmiersystem DUS zurück gelesen.

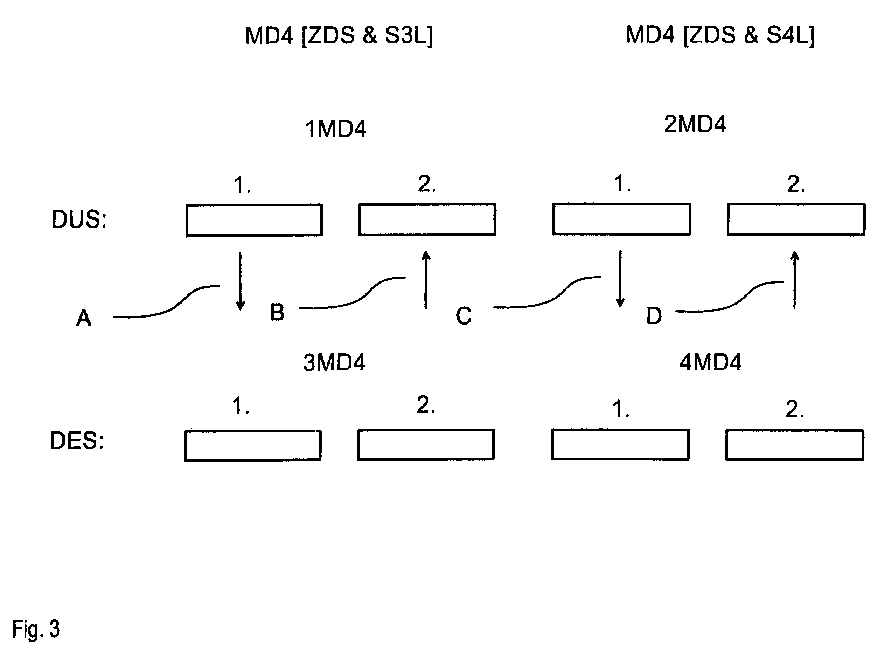

Aus den zurückübermittelten codierten Projektierdaten S3L(ZDS), S4L(ZDS) werden mit dem Programmiersystem DUS eine erste und eine zweite MD4-Prüfsumme 1MD4, 2MD4 gebildet. Wie in Figur 3 dargestellt, werden im nächsten Verfahrensschritt der erste Teil der ersten und zweiten MD4-Prüfsumme A, C vom Programmierer DUS mit den ersten Teilen der dritten bzw. vierten MD4-Prüfsumme verglichen und bei Übereinstimmung quittiert.

Der zweite Teil der ersten und zweiten MD4-Prüfsumme werden an den Projektierer DES übermittelt und von diesem mit dem zweiten Teil der dritten und vierten MD4-Prüfsumme auf Übereinstimmung verglichen B, D und quittiert.

Nach erfolgreich durchgeführter Prüfung, d.h. bei Übereinstimmung des ersten und zweiten Teils der ersten und dritten MD4-Prüfsumme und der zweiten und vierten MD4-Prüfsumme, werden die Projektierdaten ZDS im Zielsystem ZS freigegeben. Dies erfolgt durch die Übertragung der Freigabecodes an die Zielrechner ZR1, ZR2 durch das Programmiersystem.

Die vier Schlüssel S1S, S2S, S3L, S4L, die in dem Verfahren verwendet werden, sind verschieden voneinander. Dem Programmiersystem ist sowohl der dritte und vierte Schlüssel S3L, S4L, als auch der zweite Teil der dritten und vierten MD4- Prüfsumme nicht bekannt.

### Bezugszeichensliste

- ZS: Zielsystem
- ZR1: Erster Zielrechner
- ZR2: Zweiter Zielrechner
- STS: Streckensignalsystem
- INT: Schnittstelle
- DUS: Datenübermittlungssystem
- DES: Datenerstellungssystem
- ZDS: Zielsystemdatensatz
- CRC16: Daten-Prüfsumme
- MD4: MD4- Prüfsumme
- 1MD4: MD4- Prüfsumme codiert mit 1, Schlüssel
- 2MD4: MD4- Prüfsumme codiert mit 2. Schlüssel
- 3MD4: MD4- Prüfsumme codiert mit 3. Schlüssel
- 4MD4: MD4- Prüfsumme codiert mit 4. Schlüssel
- S1S: Erster Schlüssel (Schreiben)
- S2S: Zweiter Schlüssel (Schreiben)
- S3L: Dritter Schlüssel (Lesen)
- S4L: Vierter Schlüssel (Lesen)

## Patentansprüche

1. Verfahren zur Programmierung eines redundant ausgeführten Zielsystems (ZS), welches mindestens einen ersten und einen zweiten Zielrechner (ZR1, ZR2), auf denen identische Zielsystemdatensätze (ZDS) abgelegt werden, aufweist, die über eine Schnittstelle mit einem Datenübermittlungssystem (DUS) verbunden und über einen Steuerbefehl selektierbar sind, wobei
A) aus einer Projektiervorgabe für das Zielsystem (ZS) mittels eines Datenerstellungssystem (DES) ein Zielsystemdatensatz (ZDS) erzeugt wird;
B) der Zielsystemdatensatz (ZDS) mittels des Datenübermittlungssystems (DUS) mit einem ersten Schlüssel (S1S) codiert an den ersten Zielrechner (ZR1) und mittels einem zweiten Schlüssel (S2S) codiert an den zweiten Zielrechner (ZR2) übertragen werden;
C) der codiert übermittelte Zielsystemdatensatz (ZDS) mittels jeweils eines auf dem ersten und dem zweiten Zielrechner (ZR1, ZR2) abgelegten Decodierschlüssels entschlüsselt und abgespeichert wird;
D) der so entschlüsselte Zielsystemdatensatz (ZDS) selbst mit jeweils einem auf dem ersten und dem zweiten Zielrechner (ZR1, ZR2) abgelegten dritten bzw. vierten Schlüssel (S3L, S4L) erneut codiert und an das Datenübermittlungssystem (DUS) zurück übermittelt werden;
E) aus dem zurückübermittelten codierten Zielsystemdatensatz (ZDS) im Datenübermittlungssystem (DUS) eine erste und eine zweite Prüfsumme (1MD4, 2MD4) gebildet wird,
F) mittels des Datenerstellungssystem (DES) der Zielsystemdatensatz (ZDS) mit dem dritten und vierten Schlüssel (S3L, S4L) codiert und aus dem codierten Zielsystemdatensatz eine dritte bzw. vierte Prüfsumme (3MD4, 4MD4) gebildet wird, wobei die erste, zweite, dritte und vierte Prüfsumme (1MD4, 2MD4, 3MD4, 4MD4) jeweils einen ersten und ein zweiten Teil umfassen;
G) die ersten Teile der dritten und vierten Prüfsumme (3MD4, 4MD4) im Datenübermittlungssystem (DUS) mit den ersten Teilen der ersten bzw. zweiten Prüfsumme (1MD4, 2MD4) verglichen und bei Übereinstimmung quittiert werden; und
H) die zweiten Teile der ersten und zweiten Prüfsumme (1MD4, 2MD4) im Datenerstellungssystem (DES) mit den zweiten Teilen der dritten bzw. vierten Prüfsumme (3MD4, 4MD4) verglichen und bei Übereinstimmung quittiert werden.

2. Verfahren nach Anspruch 1,
**dadurch gekennzeichnet, dass**
das Datenerstellungssystem (DES) und das Datenübermittlungssystem (DUS) zwei voneinander unabhängige Systeme sind.

3. Verfahren nach einem der Ansprüche 1 bis 2,
**dadurch gekennzeichnet, dass**
die vier Schlüssel (S1S, S2S, S3L, S4L) verschieden voneinander sind.

4. Verfahren nach einem der Ansprüche 1 bis 3,
**dadurch gekennzeichnet, dass**
dem Datenübermittlungssystem (DUS) der dritte und vierte Schlüssel (S3L, S4L) nicht bekannt ist.

5. Verfahren nach einem der Ansprüche 1 bis 4,
**dadurch gekennzeichnet, dass**
die für das Zielsystem (ZS) bestimmten Daten (ZDS) mit einer Daten-Prüfsumme CRC16 geschützt sind.

6. Verfahren nach Anspruch 1,
**dadurch gekennzeichnet, dass**
vor einem Einbringen eines neuen Zieldatensatzes (ZDS) Daten in den ersten bzw. zweiten Zielrechner (ZR1, ZR2) je ein Freigabecode (RC1, RC2) gelöscht wird.

7. Verfahren nach Anspruch 6,
**dadurch gekennzeichnet, dass**
ein erster Freigabecode (RC1) fest in dem ersten Zielrechner (ZR1) und ein zweiter Freigabecode (RC2) fest in dem zweiten Zielrechner (ZR2) abgelegt ist.

8. Verfahren nach einem der Ansprüche 1 bis 7,
**dadurch gekennzeichnet, dass**
dem Datenübermittlungssystem (DUS) der zweite Teil der dritten und vierten Prüfsumme (3MD4, 4MD4) unbekannt ist.

## Claims

1. Method of programming a redundant target system (ZS), which features at least a first and a second target computer (ZR1, ZR2), on which identical target system data records (ZDS) are stored, which are connected via an interface to a data transmission system (DUS) and can be selected using a control command, in which case
A) A target data record (ZDS) is created from a project planning specification for the target system (ZS) by means of a data creation system (DES);
B) The target data record (ZDS) is transmitted encoded by means of the data transmission system (DUS) with a first key (S1S) to the first target computer (ZR1) and transmitted encoded by means of a second key (S2S) to the second target computer (ZR2);
C) The target system data record (ZDS) transmitted encoded is decrypted by means of a decoding key stored on the first and the second target computer (ZR1, ZR2) in each case and stored;
D) The target system data record (ZDS) thus decrypted is itself encoded again with a third or fourth key (S3L, S4L) stored on the first and the second target computer (ZR1, ZR2) in each case and is transmitted back to the data transmission system (DUS);
E) A first and a second checksum (1MD4, 2MD4) are formed in the data transmission system (DUS) from the returned encoded target system data record (ZDS),
F) The target system data record (ZDS) is encoded with the third and fourth key (S3L, S4L) by means of the data creation system (DES) and from the encoded target system data record a third or fourth checksum (3MD4, 4MD4) is formed, with the first, second, third and fourth checksum (1MD4, 2MD4, 3MD4, 4MD4) comprising a first and a second part in each case;
G) The first parts of the third and fourth checksum (3MD4, 4MD4) in the data transmission system (DUS) are compared with the first parts of the first or second checksum (1MD4, 2MD4) and acknowledged if a match is found; and
H) The second parts of the first and second checksum (1MD4, 2MD4) are compared in the data creation system (DES) with the second parts of the third or fourth checksum (3MD4, 4MD4) and acknowledged if a match is found.

2. Method in accordance with claim 1,
**characterized in that**
the data creation system (DES) and the data transmission system (DUS) are two independent systems.

3. Method in accordance with one of the claims 1 to 2,
**characterized in that**
the four keys (S1S, S2S, S3L, S4L) are different from one another.

4. Method in accordance with one of the claims 1 to 3,
**characterized in that**
the third and fourth key (S3L, S4L) is not known to the data transmission system (DUS).

5. Method in accordance with one of the claims 1 to 4,
**characterized in that**
the data (ZDS) intended for the target system (ZS) is protected by a data checksum CRC16.

6. Method in accordance with claim 1,
**characterized in that**
before a new target data record (ZDS) is imported a release code (RC1, RC2) is cleared in the first or second target computer (ZR1, ZR2) in each case.

7. Method in accordance with claim 6,
**characterized in that**
a first release code (RC1) is permanently stored in the first target computer (ZR1) and a second release code (RC2) is permanently stored in the second target computer (ZR2).

8. Method in accordance with one of the claims 1 to 7,
**characterized in that**
the second part of the third and fourth checksum (3MD4, 4MD4) is unknown to the data transmission system (DUS).

## Revendications

1. Procéde de programmation d'un système (ZS) de destination, redondant qui a au moins un premier et un deuxième ordinateur (ZR1, ZR2) de destination, dans lesquels sont mémorisés des jeux (ZDS) identiques de données de système de destination, les deux ordinateurs étant reliés par une interface à un système (DUS) de transmission de données et pouvant être sélectionnés par un ordre de commande, dans lequel
A) on produit à partir d'une prescription de projet pour le système (ZS) de destination un jeu (ZDS) de données de système de destination au moyen d'un système (DES) d'élaboration de données ;
B) on transmet le jeu (ZDS) de données de système de destination au moyen du système (DUS) de transmission de données en le codant par une première clé (S1S) au premier ordinateur (ZR1) de destination et en le codant au moyen d'une deuxième clé (S2S) au deuxième ordinateur (ZR2) de destination ;
C) on déchiffre et on mémorise le jeu (ZDS) de données de système de destination transmis de façon codée au moyen de respectivement une clé de décodage mémorisée dans le premier et dans le deuxième ordinateur (ZR1, ZR2) de destination ;
D) on recode le jeu (ZDS) soi-même de données de système de destination déchiffré par respectivement une troisième et une quatrième clé (S3L, S4L) mémorisées dans le premier et dans le deuxième ordinateur (ZR1, ZR2) de destination et on le retransmet au système (DUS) de transmission de données ;
E) on forme dans le système (DUS) de transmission de données une première et une deuxième sommes (1MD4,2MD4) de contrôle à partir du jeu (ZDS) de données de système de destination codées et retransmis ;
F) on code au moyen du système (DES) d'élaboration de données le jeu (ZDS) de données de système de destination par les troisième et quatrième clés (S3L, S4L) et on forme à partir du jeu de données de système de destination codées une troisième et une quatrième sommes (3MD4,4MD4) de contrôle les première, deuxième, troisième et quatrième sommes (1MD4,2MD4, 3MD4, 4DM4) de contrôle comprenant respectivement une première et une deuxième partie ;
G) on compare les premières parties des troisième et quatrième sommes (3MD4, 4MD4) de contrôle dans le système (DUS) de transmission de données aux premières parties des première et deuxième sommes (1MD4, 2MD4) de contrôle et on donne quitus si elles coïncident ; et
H) on compare les deuxième parties des première et deuxième sommes (1MD4, 2MD4) de contrôle dans le système (DES) d'élaboration de données aux deuxièmes parties des troisième et quatrième sommes (3MD4, 4MD4) de contrôle et on donne quitus si elles coïncident.

2. Procédé suivant la revendication 1, **caractérisé en ce que** le système (DES) d'élaboration de données et le système (DUS) de transmission de données sont des systèmes indépendants l'un de l'autre.

3. Procédé suivant l'une des revendications 1 à 2, **caractérisé en ce que** les quatre clés (S1S, S2S, S3L, S4L) sont différentes les unes des autres.

4. Procédé suivant l'une des revendications 1 à 3, **caractérisé en ce que** la troisième et la quatrième clés (S3L, S4L) ne sont pas connues du système (DUS) de transmission de données.

5. Procédé suivant l'une des revendications 1 à 4, **caractérisé en ce que** les données (ZDS) destinées au système (ZS) de destination sont protégées par une somme CRC16 de contrôle de données.

6. Procédé suivant la revendication 1, **caractérisé en ce qu'**avant d'introduire un nouveau jeu (ZDS) de données de destination dans le premier ou dans le deuxième ordinateur (ZR1, ZR2) de destination, on efface respectivement un code (RC1, RC2) de libération.

7. Procédé suivant la revendication 6, **caractérisé en ce que** l'on mémorise un premier code (RC1) de libération de manière fixe dans le premier ordinateur (ZR1) de destination et un deuxième code (RC2) de libération de manière fixe dans le deuxième ordinateur (ZR2) de destination.

8. Procédé suivant l'une des revendications 1 à 7, **caractérisé en ce que** la deuxième partie des troisième et quatrième sommes (3MD4, 4MD4) de contrôle est inconnue du système (DUS) de transmission de données.
